# EUROPÄISCHE PATENTSCHRIFT

(11) **EP 0 897 784 B1**
(45) Veröffentlichungstag und Bekanntmachung des Hinweises auf die Patenterteilung: **08.05.2002**
(21) Anmeldenummer: 98112833.3
(22) Anmeldetag: 10.07.1998
(51) Int. Cl.: B29C 45/16, G06K 19/077, B29C 45/00

(54) **Chipkarte**
Chip card
Carte à puce

(30) Priorität: 20.08.1997 DE 19736063
(43) Veröffentlichungstag der Anmeldung: 24.02.1999
(73) Patentinhaber: Orga Kartensysteme GmbH, 33104 Paderborn (DE)
(72) Erfinder: Fischer, Dirk, Dr., 33106 Paderborn (DE)

(56) Entgegenhaltungen:
- EP-A- 0 548 858
- US-A- 5 443 378
- PATENT ABSTRACTS OF JAPAN vol. 12, no. 292 (M-729), 10. August 1988 & JP 63 069613 A (MAZDA MOTOR CORP), 29. März 1988
- PATENT ABSTRACTS OF JAPAN vol. 97, no. 1, 31. Januar 1997 & JP 08 224754 A (MATSUSHITA ELECTRIC WORKS LTD), 3. September 1996
- PATENT ABSTRACTS OF JAPAN vol. 10, no. 18 (M-448), 24. Januar 1986 & JP 60 176736 A (MATSUSHITA DENKO KK), 10. September 1985
- PATENT ABSTRACTS OF JAPAN vol. 9, no. 194 (M-403), 10. August 1985 & JP 60 058819 A (KINUGAWA GOMU KOGYO KK), 5. April 1985

## Beschreibung

Die Erfindung betrifft eine Chipkarte nach dem Oberbegriff des Patentanspruchs 1.

Aus der EP 0 430 282 B1 ist es bekannt, mehrere innere Kartenschichten aus einem thermoplastischen Elastomer vorzusehen, um einen flexiblen Kartenaufbau zu erhalten. Hierdurch kann eine höhere Biegebelastbarkeit der Chipkarte erzielt werden. Nachteilig an der bekannten Chipkarte ist, daß infolge der großen Anzahl von Schichten bzw. der Anwendung der Laminiertechnik die Herstellung der Karte relativ aufwendig ist.

Es ist bekannt, einen Kartenkörper für eine Chipkarte durch Spritzgießen eines einzigen Kunststoffmaterials herzustellen. Die physikalischen und chemischen Eigenschaften der Chipkarte werden dabei allein durch das gewählte Kunststoffmaterial bestimmt.

Die US 5 443 378 A offenbart eine Vorrichtung mit einer Spritzgußmaschine, bei der in einem einzigen Spritzgießschritt das erste und zweite Kunststoffmaterial durch die Hauptspritzdüse unter Umkehrung der räumlichen Anordnung in den Formraum spritzbar ist.

Ferner offenbart die JP 63069613 ein mehrschichtiges Spritzgießteil mit einem Hautmaterial. Dieses Hautmaterial ist sehr dünn ausgebildet und dient allein als Schutzbeschichtung für das die physikalischen Eigenschaften des Spritzgießteils bestimmende Kernmaterial.

Aus der JP 08224754 A ist ein Spritzguß-Verfahren bekannt, nach dem wärmeisoliertes Tafelgeschirr hergestellt werden kann, indem ein aufgeschäumter Kunstharz, der als innere Isolierschicht fungiert, durch eine Oberflächenschicht überdeckt ist.

Die JP 60176736 A offenbart ein Spritzgießwerkzeug, das ein Einspritzen von einem Kernmaterial und einem Hautmaterial ermöglicht. Jedoch handelt es sich bei dem gespritzten Körper nicht um einen der Chipkarte vergleichbaren flachen Körper. Die Einspritzdüse ist senkrecht zu der Hauptfläche des zu spritzenden Körpers orientiert. Das Spritzgießwerkzeug dient hierbei zum Spritzen von äußerst dünnem Hautmaterial.

Ferner ist aus der, der Erfindung nächstliegenden, EP 0 548 858 A1 eine Chipkarte bekannt, die durch Spritzgießen hergestellt wird. Diese Schrift wurde bei der Bildung des Oberbegriffs des unabhängigen Anspruchs 1 zugrundegelegt. Diese Chipkarte besteht aus mehreren übereinanderliegenden Schichten, wobei die einzelnen Schichten unterschiedliche Materialeigenschaften bzw. Farbgebungen aufweisen. Der Schichtaufbau wird dazu genutzt, eine "visuelle Echheitsüberprüfbarkeit" der Chipkarte zu gewährleisten. Die obere und untere Schicht bilden hierbei keine die mittlere Schicht vollständig umschließende Hautkomponente.
Die Materialeigenschaften der bekannten Schichten werden bestimmt durch das Erfordernis, ein Sicherheitsmerkmal in der Chipkarte zu integrieren.

Aufgabe der Erfindung ist es, eine Chipkarte anzugeben, die derart ausgebildet ist, dass die mechanischen und physikalischen Eigenschaften der Karte verbessert sind. Darüber hinaus soll auf einfache Weise eine kostengünstige Zusammensetzung des Kartenkörpers selbst und zugleich eine schnelle, der Karte als Massenware gerecht werdende Herstellung gewährleistet werden.

Zur Lösung dieser Aufgabe weist die Erfindung die Merkmale des Patentanspruchs 1 auf.

Zweckmäßige Weiterbildungen der Erfindung sind Gegenstand der abhängigen Ansprüche.

Der besondere Vorteil der erfindungemäßen Chipkarte besteht darin, daß durch die Ausbildung eines spritzgießtechnisch hergestellten Kartenkörpers als Kombination einer Kernkomponente und einer diese umgebende Hautkomponente aus unterschiedlichen Kunststoffmaterialien die physikalischen bzw. mechanischen Eigenschaften der Karte erheblich verbessert werden können. Vorteilhaft können die Haut- und Kernkomponente unterschiedliche Materialeigenschaften aufweisen. Während die Kernkomponente aus einem besonders gut fließfähigen Kunststoffmaterial bestehen kann, kann sich die Hautkomponente aus einem für die Beschriftung oder Bedruckung geeigneten Kunststoffmaterial ausgebildet sein.

Nach einer Ausgestaltung der Erfindung ist die Kernkomponente vollständig durch die Hautkomponente eingeschlossen. Hierdurch ist ein angußfreier Kartenkörper herstellbar.

Nach einer Weiterbildung der Erfindung kann die Hautkomponente Mittel zur Laserbeschriftung aufweisen, so daß der Kartenkörpers nachfolgend im Bereich seiner Oberfläche mit visuellen Informationen versehen werden kann.

Nach einer Weiterbildung der Erfindung kann die Kernkomponente auch ein Mittel zur Laserbeschriftung aufweisen, so daß es als Echtheitsmerkmal geschützt unterhalb der Kartenoberfläche angeordnet ist.

Vorzugsweise ist das Mittel zur Laserbeschriftung als Laseradditiv bestehend aus einer Anzahl von Ruß- oder Perlglanzpigmenten ausgebildet.

Nach einer Ausgestaltung der Erfindung besteht die Hautkomponente aus einem thermotranferdruckfähigen oder thermosublimationsdruckfähigen Kunststoffmaterial, so daß die Oberfläche in einem gewünschten Bereich mittels eines Thermodruckers bzw. eines Thermosublimationsdruckers bedruckt werden kann. Ein Beispiel für ein thermotransferdruckfähiges oder thermosublimationsdruckfähiges Material ist der Kunststoff PVC, der sich durch besonders gute Haftung der Farbstoffe oder Farbpigmente auszeichnet.

Nach einer Ausgestaltung der Erfindung weist die Hautkomponente eine Dicke von 0,1 bis 0,2 mm auf, so daß das größte Volumen der Chipkarte durch die Kernkomponente gebildet ist. Vorzugsweise besteht die Kernkomponente aus einem Recyclat, das auf diese Weise wieder dem Herstellungsprozeß zugeführt werden kann.

Nach einer Weiterbildung der Erfindung kann die Kernkomponente auch durch ein thermoplastisches Elastomer gebildet werden, wobei die Elastizität bzw. die Biegebelastbarkeit der Chipkarte verbessert wird.

Vorteilhafterweise können die Haut- und Kernkomponente aus unterschiedlichen Kunststoffmaterialien bestehen, wobei die Hautkomponente aus einem visuell ansprechenden Kunststoffmaterial und die Kernkomponente aus einem ausreichende Materialeigenschaften aufweisenden Kunststoff gebildet ist. Zusätzlich kann der Hautkomponente ein Farbmittel zugesetzt werden. Auf diese Weise ist eine wirtschaftliche Herstellung der Chipkarte gewährleistet.

Ausführungsbeispiele der Erfindung werden nachfolgend anhand der Zeichnungen näher erläutert.

Es zeigen:
- Fig.1: einen Längsschnitt durch eine Chipkarte nach einem ersten Ausführungsbeispiel,
- Fig.2: einen Längsschnitt durch eine Chipkarte nach einem zweiten Ausführungsbeispiel,
- Fig.3: einen Längsschnitt durch eine Chipkarte nach einem dritten Ausführungsbeispiel und
- Fig.4: eine Vorrichtung zur Herstellung einer Chipkarte.

Die nachfolgendend beschriebenen Chipkarten werden durch Spritzgießen mittels einer Spritzgießmaschine hergestellt, die geeignet ist, mehrere Materialien, vorzugsweise zwei Materialien, nacheinander bzw. fast gleichzeitig in eine Form einzuspritzen. Dabei kann die Spritzgießmaschine eine Düse aufweisen, durch die die Materialien nacheinander, oder zwei Düsen aufweisen, durch die jeweils ein Material fast gleichzeitig, in die Form eingespritzt wird. Wichtig dabei ist, daß die Hautkomponente zuerst in die Form eintritt und durch das Einspritzen der nachfolgenden Kernkomponente an der Formwand unter Erkaltung verteilt wird.

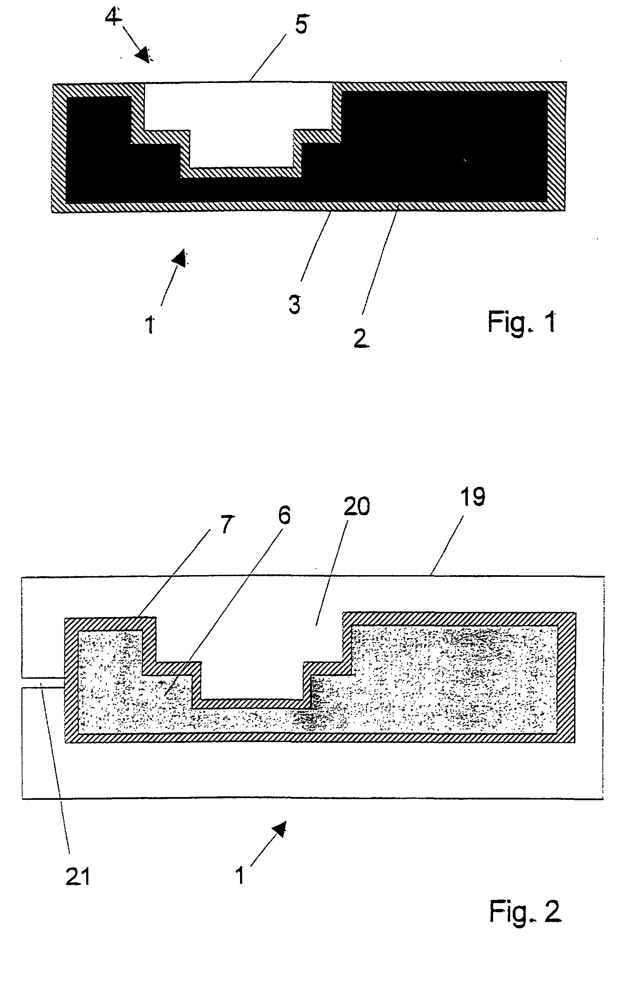

Fig. 1 zeigt eine Chipkarte 1 nach einem ersten Ausführungsbeispiel, bei der eine Kernkomponente 2 aus einem Recyclat und eine Hautkomponente 3 aus einem PC-Kunststoffmaterial gebildet ist. Das Recyclat wird aus einem geschredderten und eingeschmolzenen Kunststoffmaterial aus beispielsweise ABS oder PVC gebildet und hat im Vergleich zu der Hautkomponente eine wenig ansprechende Farbe. Die Materialeigenschaften des Recyclats können identisch zu dem für die Hautkomponente 3 verwendeten Material sein.

Die Kernkomponente 2 ist vollständig durch die Hautkomponente 3 umschlossen, so daß die Hautkomponente 3 eine schützende Schicht bildet. Sie nimmt vorzugsweise 20 % des Kartenvolumens ein, so daß die Karte 1 bei jeglicher mechanischer oder temperaturmäßiger Beanspruchung sicher durch die Hautkomponente 3 geschützt ist. Die Biegeeigenschaften der Karte 1 werden dabei hauptsächlich durch das Material der Kernkomponente 2 bestimmt. Der Volumenanteil der Hautkomponente 3 kann aber auch höher liegen, bis zu ca. 40 %.

Die Hautkomponente 3 weist eine Vertiefung 4 auf, in der ein Chipmodul 5 eingesetzt und unlösbar in dieser gehalten ist. Die Vertiefung 4 kann einerseits nach dem Spritzvorgang durch Fräsen erzeugt oder andererseits während des Spritzvorgangs durch Senken eines verschiebbaren Formstempels gebildet sein.

Nach einem zweiten Ausführungsbeispiel gemäß Fig. 2 wird im unterschied zum vorherigen Ausführungsbeispiel eine Kernkomponente 6 aus einem thermoplastischen Elastomer (TPE) und eine Hautkomponente 7 aus einem hochtemperaturbeständigen Werkstoff, beispielsweise PC, gebildet. Hierdurch kann die Biegeelastizität der Karte 1 erhöht werden. Die Chipkarte 1 wird in einer Form 19 geformt, wobei ein Formvorsprung 20 die Vertiefung für das spätere Einsetzen eines Chipmoduls ermöglicht. Eine Einspritzstelle 21, durch die das Einspritzmaterial in die Form 19 eingespritzt wird, befindet sich etwa mittig auf einer kurzen Schmalseite der Chipkarte.

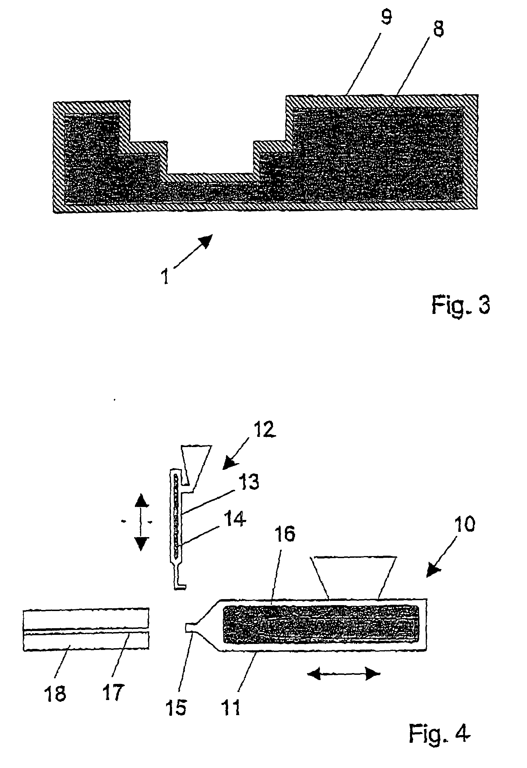

Nach einem weiteren Ausführungsbeispiel gemäß Fig. 3 weist die Karte 1 eine Kernkomponente 8 bestehend aus einem ABS-Material und eine Hautkomponente 9 bestehend aus einem mit Farbmittel zugesetzten PC-Material auf. Hierdurch ist eine beliebige Farbgebung der Karte 1 möglich.

Fig.4 zeigt eine Vorrichtung zum Spritzgießen einer Karte, die aus einer Spritzgießmaschine 10 mit einem Hauptzylinder 11 und einem Nebenaggregat 12 mit einem Nebenzylinder 13 besteht. Die Zylinder 11, 13 sind als Plastifizierungszylinder ausgebildet, wobei in dem Nebenzylinder 13 eine Hautkomponente 14 plastifiziert wird und in einem Vorbereitungsschritt dieselbe nach Verfahren des Nebenaggregats 12 in den Düsenbereich des Hauptaggregats 10 durch eine Hauptspritzdüse 15 der Spritzgießmaschine 10 in den Hauptzylinder 11 geleitet wird. In dem Hauptzylinder 11 verdrängt die Hautkomponentenschmelze eine bereits geschmolzene Kernkomponente 16. In einem nachfolgenden Spritzvorgang werden beide Komponenten 14, 16 durch die Hauptspritzdüse 15 in einem Formraum 17 gespritzt, der durch Anordnung einer entsprechenden Form 18 gebildet ist. Bei diesem Einspritzvorgang werden die Komponenten 14, 16 in Schmelzform bei konstanter Fließgeschwindigkeit eingespritzt, wobei sich die Hautkomponente 14 nach und nach an die Formwände legt und dort erkaltet, wobei die Kernkomponente 16 sich nach und nach auf die durch die Hautkomponente 14 gebildete Haut legt und den inneren Bereich des Formraums 17 ausfüllt. Dieses Verfahren ermöglicht eine einfache Bedienung, da lediglich das Materialmengenverhältnis angegeben werden muß. Beim Spritzvorgang erfolgt keine Umschaltung zwischen der Haut- und Kernkomponentenzuführung.

## Patentansprüche

1. Chipkarte mit einem Kartenkörper, der mittels Spritzgießen in einem Formraum aus mindestens einem Kunststoffmaterial herstellbar ist, **dadurch gekennzeichnet, dass** der Kartenkörper durch Einspritzen eines ersten Kunststoffmaterials zur Bildung einer Hautkomponente (3) der Chipkarte (1) einerseits und durch Einspritzen eines zweiten Kunststoffmaterials zur Bildung einer Kernkomponente (2) der Chipkarte (1) andererseits
herstellbar ist, wobei die Hautkomponente (3) die Kernkomponente (2) vollständig umgibt und wobei die Hautkomponente (3) einen Volumenanteil von mindestens 20% am Kartenkörper aufweist.

2. Chipkarte nach Anspruch 1, **dadurch gekennzeichnet, dass** die Hautkomponente (3) einen Volumenanteil von 20% bis 40% am Kartenkörper aufweist.

3. Chipkarte nach Anspruch 1 oder 2, **dadurch gekennzeichnet, dass** die Hautkomponente (3) Mittel zur Laserbeschriftung aufweist, derart, dass visuell sichtbare Informationen durch eine mittels Laserstrahl bewirkten lokalen Materialumwandung der Hautkomponente (3) bildbar sind.

4. Chipkarte nach einem der Ansprüche 1 bis 3, **dadurch gekennzeichnet, dass** das Mittel zur Laserbeschriftung als Laseradditiv ausgebildet ist, das dem für die Hautkomponente (3) vorgesehenen Kunststoffmaterial hinzugemischt wird.

5. Chipkarte nach Anspruch 1 oder 2, **dadurch gekennzeichnet, dass** das der Hautkomponente (3) zugeordnete erste Kunststoffmaterial transparent ausgebildet ist und dass das der Kernkomponente (2) zugeordnete zweite Kunststoffmaterial ein Mittel zur Laserbeschriftung aufweist.

6. Chipkarte nach einem der Ansprüche 1 bis 5, **dadurch gekennzeichnet, dass** das Mittel zur Laserbeschriftung im sichtbaren Wellenlängenbereich transparent und in einem Wellenlängenbereich des Laserstrahls absorbierend ausgebildet ist.

7. Chipkarte nach einem der Ansprüche 1 bis 6, **dadurch gekennzeichnet, dass** das Mittel zur Laserbeschriftung durch Einwirkung des Laserstrahls eine Verfärbung aufweist.

8. Chipkarte nach einem der Ansprüche 1 bis 7, **dadurch gekennzeichnet, daß** die Hautkomponente (3) aus einem thermotransferdruckfähigem Kunststoff, insbesondere aus PVC, besteht.

9. Chipkarte nach einem der Ansprüche 1 bis 8, **dadurch gekennzeichnet, daß** die Hautkomponente (3) eine Dicke von 0,1 mm bis 0,2 mm aufweist.

10. Chipkarte nach einem der Ansprüche 1 bis 9, **dadurch gekennzeichnet, daß** die Kernkomponente (2) aus einem Recyclat und die Hautkomponente (3) aus einem hochwertigen Kunststoff besteht.

11. Chipkarte nach einem der Ansprüche 1 bis 10, **dadurch gekennzeichnet, daß** die Kernkomponente (6) aus einem thermoplastischem Elastomer (TPE) und die Hautkomponente (7) aus einem hochtemperaturbeständigen Kunststoff ausgebildet ist.

12. Chipkarte nach einem der Ansprüche 1 bis 11, **dadurch gekennzeichnet, daß** die Hautkomponente (9) aus einem PC-Kunststoff oder einem ABS-Kunststoff besteht.

13. Chipkarte nach einem der Ansprüche 1 bis 12, **dadurch gekennzeichnet, daß** die Kernkomponente (8) aus einem ABS-Kunststoff einerseits und die Hautkomponente (9) aus einem PC-Kunststoff oder einem PMMA-Kunststoff oder einem PET-Werkstoff andererseits bestehen.

14. Chipkarte nach einem der Ansprüche 1 bis 13, **dadurch gekennzeichnet, daß** die Hautkomponente (9) und/oder die Kernkomponente (8) aus einem Kunststoff unter Zusatz eines Farbmittels bestehen.

## Claims

1. Chip card with a card body, which can be produced by means of injection-moulding in a mould cavity from at least one plastics material, **characterized in that** the card body can be produced by injecting a first plastics material to form a skin component (3) of the chip card (1), on the one hand, and by injecting a second plastics material to form a core component (2) of the chip card (1), on the other hand, the skin component (3) completely surrounding the core component (2), and the skin component (3) comprising a proportion by volume of the card body of at least 20%.

2. Chip card according to Claim 1, **characterized in that** the skin component (3) comprises a proportion by volume of the card body of 20% to 40%.

3. Chip card according to Claim 1 or 2, **characterized in that** the skin component (3) has an agent for laser inscription in such a way that visually perceptible information can be formed by a local material transformation of the skin component (3) brought about by means of a laser beam.

4. Chip card according to one of Claims 1 to 3, **characterized in that** the agent for laser inscription takes the form of a laser additive which is admixed with the plastics material intended for the skin component (3).

5. Chip card according to one of Claims 1 to 3, **characterized in that** the first plastics material, assigned to the skin component (3), takes a transparent form and **in that** the second plastics material, assigned to the core component (2), has an agent for laser inscription.

6. Chip card according to one of Claims 1 to 5, **characterized in that** the agent for laser inscription takes such a form that it is transparent in the visible wavelength range and absorbent in a wavelength range of the laser beam.

7. Chip card according to one of Claims 1 to 6, **characterized in that** the agent for laser inscription exhibits a change in colour when exposed to the laser beam.

8. Chip card according to one of Claims 1 to 7, **characterized in that** the skin component (3) consists of a plastic suitable for thermal transfer printing, in particular of PVC.

9. Chip card according to one of Claims 1 to 8, **characterized in that** the skin component (3) has a thickness of 0.1 mm to 0.2 mm.

10. Chip card according to one of Claims 1 to 9, **characterized in that** the core component (2) consists of a recycled material and the skin component (3) consists of a high-grade plastic.

11. Chip card according to one of Claims 1 to 10, **characterized in that** the core component (6) is formed from a thermoplastic elastomer (TPE) and the skin component (7) is formed from a high-temperature-resistant plastic.

12. Chip card according to one of Claims 1 to 11, **characterized in that** the skin component (9) consists of a PC plastic or an ABS plastic.

13. Chip card according to one of Claims 1 to 12, **characterized in that** the core component (8) consists of an ABS plastic, on the one hand, and the skin component (9) consists of a PC plastic or a PMMA plastic or a PET plastic, on the other hand.

14. Chip card according to one of Claims 1 to 13, **characterized in that** the skin component (9) and/or the core component (8) consist of a plastic with an added colorant.

## Revendications

1. Carte à puce comprenant un corps de carte qui peut être fabriqué par moulage par injection dans l'espace d'un moule en au moins une matière plastique, **caractérisée en ce que** le corps de carte peut être réalisé d'une part par injection d'une première matière plastique pour former un composant pellicule (3) de la carte à puce (1) et d'autre part par injection d'une deuxième matière plastique pour former un composant âme (2) de la carte à puce (1), le composant pellicule (3) entourant entièrement le composant âme (2) et le composant pellicule (3) présentant une part volumique d'au moins 20% du corps de la carte.

2. Carte à puce selon la revendication 1, **caractérisée en ce que** le composant pellicule (3) présente une part volumique de 20% à 40% du corps de la carte.

3. Carte à puce selon la revendication 1 ou 2, **caractérisée en ce que** le composant pellicule (3) présente un moyen de marquage au laser tel qu'il permet de constituer des informations visibles à l'oeil par le biais d'une transformation locale du matériau du composant pellicule (3) effectuée avec un rayon laser.

4. Carte à puce selon l'une des revendications 1 à 3, **caractérisée en ce que** le moyen de marquage au laser est réalisé sous la forme d'un additif pour laser qui est mélangé à la matière plastique prévue pour le composant pellicule (3).

5. Carte à puce selon la revendication 1 ou 2, **caractérisée en ce que** la première matière plastique associée au composant pellicule (3) est transparente et que la deuxième matière plastique associée au composant âme (2) présente un moyen de marquage au laser.

6. Carte à puce selon l'une des revendications 1 à 5, **caractérisée en ce que** le moyen de marquage au laser est transparent dans la gamme des longueurs d'onde visibles et il est réalisé dans une gamme de longueurs d'onde absorbant le rayon laser.

7. Carte à puce selon l'une des revendications 1 à 6, **caractérisée en ce que** le moyen de marquage au laser présente une coloration sous l'effet du rayon laser.

8. Carte à puce selon l'une des revendications 1 à 7, **caractérisée en ce que** le composant pellicule (3) est réalisé dans une matière plastique pouvant être appliquée par transfert thermique sous pression, plus particulièrement du PVC.

9. Carte à puce selon l'une des revendications 1 à 8, **caractérisée en ce que** le composant pellicule (3) présente une épaisseur comprise entre 0,1 mm et 0,2 mm.

10. Carte à puce selon l'une des revendications 1 à 9, **caractérisée en ce que** le composant âme (2) est constitué de matière recyclée et le composant pellicule (3) de matière plastique de haute qualité.

11. Carte à puce selon l'une des revendications 1 à 10, **caractérisée en ce que** le composant âme (6) est constitué d'un élastomère thermoplastique (TPE) et le composant pellicule (7) d'une matière plastique résistante aux hautes températures.

12. Carte à puce selon l'une des revendications 1 à 11, **caractérisée en ce que** le composant pellicule (9) est constitué d'une matière plastique PC ou d'une matière plastique ABS.

13. Carte à puce selon l'une des revendications 1 à 12, **caractérisée en ce que**, d'une part, le composant âme (8) est constitué d'une matière plastique ABS et, d'autre part, le composant pellicule (9) est constitué d'une matière plastique PC ou d'une matière plastique PMMA ou encore d'un matériau PET.

14. Carte à puce selon l'une des revendications 1 à 13, **caractérisée en ce que** le composant pellicule (9) et/ou le composant âme (8) est constitué d'une matière plastique à laquelle a été ajouté un colorant.
